# EUROPEAN PATENT SPECIFICATION

(11) **EP 4 557 560 B1**
(45) Date of publication and mention of the grant of the patent: **16.09.2026**
(21) Application number: 23210895.1
(22) Date of filing: 20.11.2023
(51) Int. Cl.: H02J 7/00, H02J 50/00, H02J 7/70

(54) **HOLDER FOR VERTICAL WIRELESS CHARGING**
HALTER FÜR VERTIKALES DRAHTLOSES LADEN
SUPPORT POUR CHARGE SANS FIL VERTICALE

(43) Date of publication of application: 21.05.2025
(73) Proprietor: Volvo Car Corporation, 405 31 Göteborg (SE)
(72) Inventor: Vilhelmsson, Johan, 442 32 Kungälv (SE); Leijon, Kristian, 421 43 Västra Frölunda (SE)
(74) Representative: Nederlandsch Octrooibureau

(56) References cited:
- JP-A- 2001 052 761
- US-A1- 2015 018 051

## Description

### Technical Field

The present disclosure relates to devices for vertical wireless charging, reading and/or storage, for example, for a phone, fob and/or card.

### Background

Typical wireless device (e.g., phone) chargers in vehicles are horizontally oriented with a flat surface on which a user can place a wireless phone or other device for inductive charging. This is typically located in the center console, or alternatively in a part of the front console or dashboard, often below a screen or other user interface. Such a configuration can also include a rim or frame to help ensure that the wireless device does not slide off during vehicle operations.

In some vehicles, a key fob (hereinafter "fob") charger is also provided. The fob is a small electronic device often attached to a key chain which can be used in place of a key to unlock a door and/or allow for starting a car. Such a device runs on batteries, which need to be replaced and/or recharged occasionally.

Another device used in some vehicles is a keycard, which is a small physical card (e.g., plastic card in shape and size of a typical bank or credit card) that can also be used for unlocking and/or starting a vehicle. This typically works with near field communication ("NFC") technology where the user needs to touch or place the card near a reader at the door (to unlock) and/or inside the vehicle to allow for starting. In some cases, this must be done quickly after entering the vehicle, for example, within 30 seconds. This reader is also typically a horizontal surface, sometimes with a rim or other retention feature, on which the card can be easily and quickly placed.

US2015/018051A1 and JP2001052761A disclose examples of a wireless charger for a mobile device, wherein a mechanism based on pivoting parts secures the device.

### Summary of Invention

The devices, systems and methods of the current application can provide a way free up more space in a vehicle or other device or system by providing a vertical charging, reading and/or storage device which is simple yet effective for retaining a device to wirelessly charge, read and/or simply store. This can be used for one or more of a wireless phone, keycard, fob or other devices which need to be charged, read and/or stored in a convenient place with easy access to a driver or other user.

According to a first aspect, a device comprises a housing comprising a front face with a cavity configured to receive a card and/or fob; a base comprising a charger with a major surface extending substantially vertically from the base; and a biased pivot arm connected to the housing on a first end. The pivot arm is biased such that the front face of the housing is pushed toward the major surface of the charger but can be pivoted back to receive one or more devices between the front face and the major surface. Substantially vertically can mean, for example, within 30 degrees of vertical when the device is in use (e.g., connected to a vehicle component and able to connect to/receive a device for charging), preferably at least 15-20 degrees from vertical, more preferably within 10 degrees of vertical.

Such a device can provide for effective wireless (e.g., inductive) charging of a device while minimizing the space needed by holding the device vertically between the housing and the charger. The biased pivot arm and housing ensure that the device is held in place against the charger for effective charging (or simply storage), and the cavity of the housing front face can help to retain the device/card/fob even when subject to strong and varying forces, such as in an operating vehicle. This construction enables the phone or other device to be held and aligned to be in close proximity to the charger for effective charging. The biased pivot arm is configured such that it can be easily pushed direction (e.g., manually by a user) in the opposite direction of the biasing to place the device/card/fob for storage and/or charging or for removal, even with just one hand. The biasing of the pivot arm ensures that it then pushes the housing back toward the charger for holding a device in close proximity and aligned for proper (e.g., inductive) charging and/or storage, making a simple yet effective charging and/or storage system for a user that takes very little space due to the vertical configuration. Thus, when used in a vehicle, this leaves more space (e.g., in a center and/or front console or dash) for other devices or features.

According to an embodiment, the pivot arm is biased with a spring. Such a spring can be a mechanical spring, torsion spring, extension spring, or any other suitable spring which could provide biasing force to the pivot arm for pushing the front face of the housing toward the major surface of the charger. The spring provides a simple way of supplying the appropriate biasing force for the device, and is easily replaceable if needed. In other embodiments, the pivot arm could be biased with another device or mechanism that provides the appropriate biasing force.

According to an embodiment, the cavity can include at least a partial rim and/or frame configured to accommodate, for example, the card or fob. Such a rim could, for example, extend around three sides of the cavity to surround the bottom and two sides when the housing is pressed against the charger or a device being charged. This can help to ensure that the card or fob in the first cavity remains in the cavity until it is desired to be removed.

According to an embodiment, the pivot arm and the base are connected to a lower pivot housing. Such a lower pivot housing can provide a stable base for a second end of the pivot arm to connect for properly biasing the housing toward the charger to promote correct placement and holding of the device(s) to be held and/or charged.

According to an embodiment, the pivot arm is connected to the housing with a pivot or rotatable connection. This can be, for example, a pivoting connection with a pin extending between receiving units on pivot arm and the housing (e.g., a cylinder on the pivot arm and end holders on the housing) or any other suitable pivotable and/or rotatable connection. Such a connection allows the housing to rotate with respect to the pivot arm to ensure that the front face can be held flat against the charger major surface and/or one or more devices in between to ensure proper holding and/or charging of the one or more devices/cards/fob.

According to an embodiment, the cavity is a first cavity and is configured to receive one of a card and a fob. The front face of the housing comprises a second cavity; and the second cavity is configured to receive an other of the card and the fob. Such a configuration allows the housing to easily, securely and in a space-effective manner accommodate both a card and a fob. The first cavity can include a first rim and/or frame configured to accommodate, for example, the card or fob. Such a first rim could, for example, extend around three sides of the cavity to surround the bottom and two sides when the housing is pressed against the charger or a device being charged. This can help to ensure that the card or fob in the first cavity remains in the cavity until it is desired to be removed. Optionally, the second cavity can then be recessed further into the housing to accommodate the other of the card or fob. The second cavity could also in some embodiments have at least a partial rim or frame. The second cavity and/or rim could be dimensioned to allow for the accommodation of one of a fob and card, but not the other ensuring that the other remains in the first cavity. Thus, such first and second cavities could be used together to accommodate both a card and a fob in the device at the same time while also allowing for only one to be placed into the device but still held secure.

According to an embodiment, the device further comprises a tilted ramp leading to the cavity of the housing. Optionally, the tilted ramp comprises a rim at least partially defining a recessed surface leading into the cavity. Such a tilted ramp can extend from a top of the housing, or could be started slightly down from the top, for example, a recessed sliding surface surrounded by a rim at the top of the housing. In some embodiments, the rim could be only on the sides (or not at all) and the ramp extends to the top of the housing. The ramp can be an inclined surface to help with ease and placement of a card and/or fob with respect to the device, and could directly lead into the cavity and the rim on the front face of the housing. For example, a card could be placed on the ramp and due to the tilting could then slide directly into the cavity on the front face of the housing. The ramp could also be used for pushing the housing away from the charger major surface to place a wireless device, card and/or fob into the device. A user can push or tilt the ramp away from the charger, and then the wireless device, card and/or fob can slide into place for storage and/or charging. Such a ramp could be, for example, 5 -70 degrees from vertical, preferably 10 to 60 degrees, more preferably 10-45 degrees which can provide an effective sliding surface into the cavity.

According to an embodiment, the device further comprises a reader unit for a card. This could be connected to the base and/or charger, though could be in another position in other configurations, for example connected to or in the housing. Such a reader unit is positioned to align with a card positioned in the device (e.g., in the cavity of the housing), and allows for reading of the card, for example, a keycard, thus enabling starting of the car.

According to an embodiment, the reader unit is configured to read a keycard when the front face of the housing is pushed toward the major surface of the charger. This provides an effective way of ensuring the keycard is correctly placed (aligned and held in close proximity to the reader) in the device such that the reader unit can read the card and the car can be started. The biasing of the housing toward the major surface of the charger with the cavity in the housing ensures that the card stays in place and does not fall despite the vertical configuration and the forces to which it is subject when in an operating vehicle.

According to an embodiment, at least part of the front face and/or major surface comprises rubber, softpaint, flock or dress (e.g., textile, leather, vinyl etc). Such surfaces can provide a soft surface to ensure that the device(s), card and/or fob placed between the housing and the charger do not become scratched despite the biasing force of the pivot arm and the housing as well as the movements to place and remove the various devices for charging, reading and/or storage. Additionally such surfaces can help provide friction on the surface(s) which can further help to retain the device in the proper position.

According to an embodiment, the device further comprises one or more fixing features to retain the card and/or fob in the cavity. Such a fixing feature could be a notch, rim, extension or any other suitable feature to ensure the card and/or fob stays in place, particularly when the housing is pulled away from the charger, for example to place or remove a device to be charged, card and/or fob.

According to a further aspect, a vehicle includes the device previously described. Optionally, the device is connected to a console (e.g., center console) and/or a front panel or dash of the vehicle. Such a device can provide a convenient and effective way of vertically charging, reading and/or storing a device, card and/or fob in a vehicle. As mentioned in the background, typical wireless chargers and/or card reader units in vehicles are oriented horizontally, taking up a large amount of space in the vehicle console or dash. The device described above allows for vertical charging, reading and/or storage while retaining the device, card and/or fob despite the forces in an operating vehicle. Thus, the device allowing for vertical charging, reading and/or storage frees up more space in the vehicle for other devices and/or systems.

According to a further aspect of the invention, a method of forming a charger comprises connecting a housing to a first side of a pivot arm, the housing comprising a front face with a cavity configured to receive a card and/or fob; connecting a charger to a base, the charger comprising a major surface extending substantially vertically from the base; and biasing the pivot arm such that the front face of the housing is biased toward the major surface of the charger. Such a method provides a simple yet effective vertical charging, reading and/or storage system, which can be especially useful in vehicles or other places where saving space is desired.

### Brief Description of Drawings

Figure 1A illustrates a schematic side view of a vertical charging device;
Figure 1B illustrates a back view of the vertical charging device of Fig. 1A;
Figure 2 illustrates a perspective view of a first housing for use in a vertical charging device; and
Figure 3 illustrates a perspective view of a second housing for use in a vertical charging device.

### Description of Embodiments

The following is a description of certain embodiments of the invention, given by way of example only and with reference to the figures.

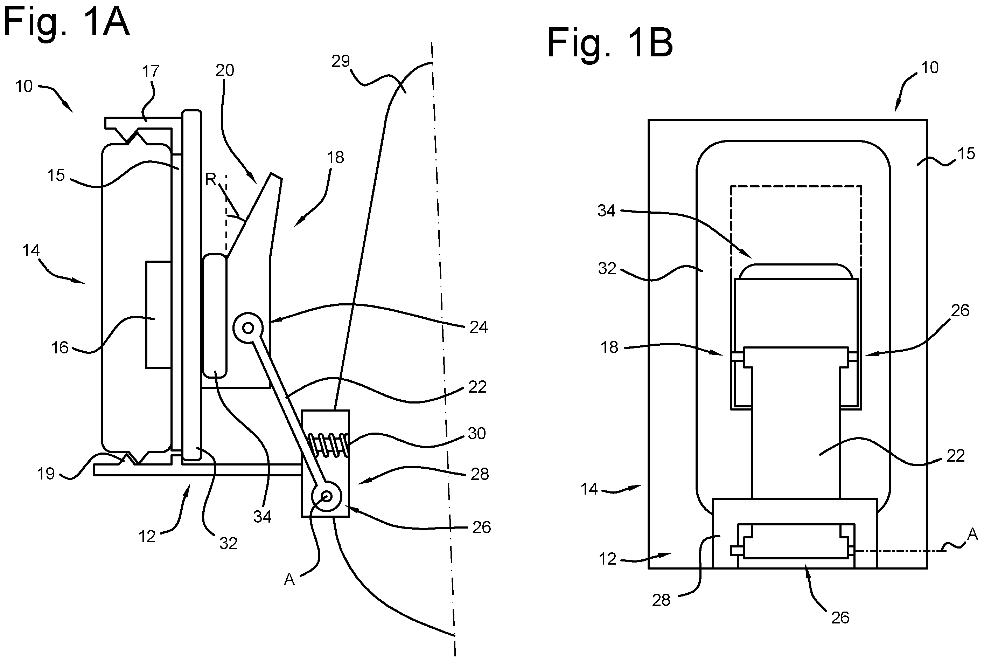

Figure 1A illustrates a schematic side view of a vertical charging device 10, and Figure 1B illustrates a back view of vertical charging device 10 with part of housing see-through for viewing purposes. For the purposes of this disclosure, vertical is used to generally indicated the direction in which the length of phone 32 is generally aligned in Fig. 1A.

Device 10 includes base 12, charger 14, reader unit 16, housing 18 with ramp 20, pivot arm 22 with first end 24 and second end 26, lower pivot housing 28, and spring 30. Also shown is phone 32 and keycard 34.

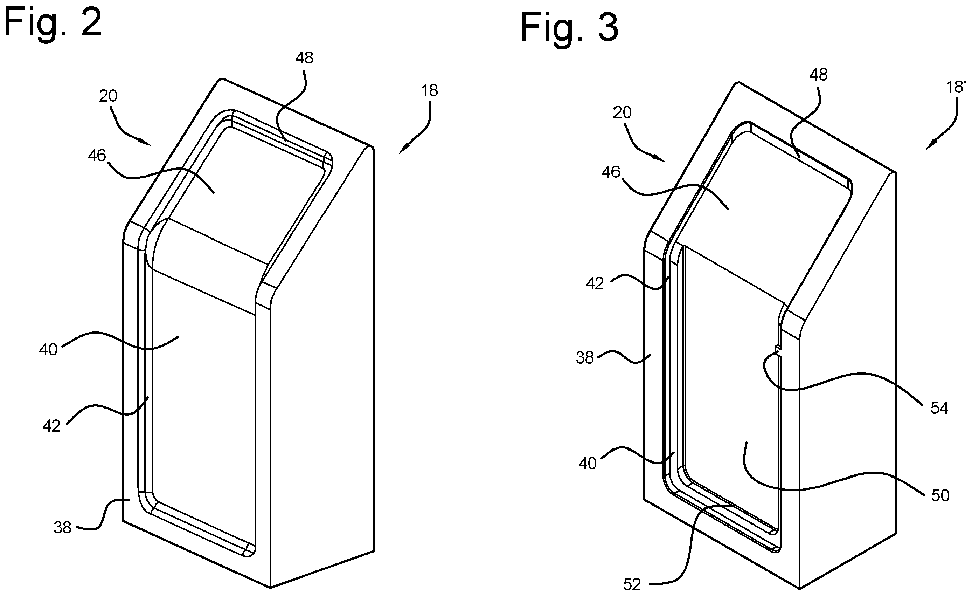

Charger 14 includes major surface 15, which extends substantially vertically from base 12. A frame 17 and/or other connection features (e.g., protrusions 19) can help to hold charger 14 in place, though in some embodiments these are all connected and/or integrally formed, sometimes including base 12. In some embodiments, charger 14 could be removable, for example, to enable replacement and/or repair. Reader unit 16 can also be connected to or formed with the charger 14 and/or frame 17, and is positioned to align with a card 34 positioned in a cavity of the housing 18 (see Figs. 2-3).

Lower pivot housing 28 connects to base 12, and to vehicle console 29 (shown only partially), though in some embodiments, the connection to the vehicle or another device could be through base in combination with lower pivot housing 28 or by itself. Pivot arm 22 extends from a first end 24 rotatingly or pivotably connected to housing 18 to a second end 24 which is rotatingly or pivotally connected to lower pivot housing 28. In some embodiments, base 12 and lower pivot housing could be one part. The rotating or pivoting connections of pivot arm allow for rotation or movement around an axis extending horizontally at the first end 24 and at the second end 26. Each of these connections could be configured such that only partial rotational movement is possible, for example within a set range which would be needed for placing or removing a device to be charged, card and/or fob. The connections could be, for example, with a pin through a cylinder in the pivot arm 22 and connected to bearings in the lower pivot housing 28 and housing 24, or through any other means allowing for rotatable and/or pivoting connections. The rotatable connection between pivot arm first end 24 and housing 18 allows for front face 38 of housing 18 to align with and abut major surface 15 of charger 14 or phone 32 to ensure correct placement in relation to charging, reading and/or storing whether there is a device (e.g., phone) between housing 18 and charger 14 or not (only a card 34 in cavity 40 allowing for front face 38 to contact major surface 15 with each extending generally parallel to each other). Thus, phone 32 would be held to be in close proximity and generally aligned to allow for charging by charger 14, and fob and/or card would be held between housing 18 and either phone 32 or major surface 15 of charger to secure the fob and/or card 34. In some embodiments, additional placement and/or securing elements could be used such as magnets, physical protrusions or edges, etc.

Pivot arm 22 is biased such that housing 18 front face 38 is pushed toward major surface 15 of charger 14 by spring 30. Specifically, pivot arm 22 pivots around axis A at second end 26 of pivot arm to move first end 24 toward charger 14. Spring could be a mechanical spring, torsion spring, extension spring, or any other suitable spring or other biasing device which could be used to provide biasing force to the pivot arm 22 for pushing the front face 38 of the housing 18 toward the major surface 15 of charger 14.

Housing 18 is shown in more detail in Figures 2-3, showing two embodiments of housing 18. In Fig. 2, housing 18 includes front face 38, cavity 40, rim 42, ramp 20 with recessed surface 46 defined by ramp rim 48. Cavity 40 is configured to hold a card, for example, a keycard of a standard size, for example, about 8.56 cm wide by 5.40 cm high and 0.76 mm thick. Rim 42 is configured to fit around card 34 on three sides (bottom and sides in a vertical position), and the depth of cavity 40 is such the when a card is inserted and housing is biased against device 32 or charger 14, front face 38 surrounding cavity 40 abuts the device 32 or charger 14 major surface 15 (see Fig. 1A) with card 34 residing in cavity 40. The height of cavity (from bottom rim 42 to where ramp 20 starts) can be equal to or in some cases less than the length of a standard card. Making the height of cavity less than the length of a standard card, for example, 10%-20% less can enable easier placement and/or removal of the card from the cavity 40.

Ramp 20 is an angled or tilted surface leading into cavity 40. The angle R can vary, for example, between 10 degrees and 70 degrees from vertical, preferably from 10 to 45 degrees. In the embodiment shown in Fig. 2, tilted ramp 20 includes recessed surface 46 with ramp rim 48. Recessed surface 46 with ramp rim 48 leads into cavity 40 with rim 42 thereby helping to further define the sliding surface and guide a card and/or fob for sliding into cavity 40.

The use of ramp 20, and in some embodiments ramp rim 48, can help to align card 34 (or a fob) with cavity 40 for proper placement for charging, to align with reader unit 16 and/or simply for storage. The use of ramp 20, and particularly a ramp 20 with recessed surface 46 can also enable placement of a card 34 or fob with little to no moving of the housing 18 itself. For example, in some instances, ramp could be tilted or configured to allow a card to slide into cavity 40 while front face 38 fully abuts major surface 15 of charger 14. In other embodiments, ramp 20 is configured to allow for placement of a card and/or fob by a small movement of the upper part of ramp 20 being tilted away from charger 14 while the lower end of housing 18 remains in contact with charger 14. Such a configuration can also help to ensure that a card or fob does not unintentionally slide out and fall to the floor during placement.

Figure 3 shows housing 18' with front face 38, first cavity 40 with first cavity rim 42, ramp 20 with recessed surface 46 and ramp rim 48, and second cavity 50 with second cavity rim 52. Housing 18' functions in the same manner as housing 18, but instead of one cavity includes two cavities 40, 50, each surrounded by a rim 42, 52, each cavity 40, 50 defining an area for receiving one of a card and a fob. For example, cavity 40 could be sized to receive a typically dimensioned card (e.g., keycard) and rim 52 of cavity 50 could be sized such that the card could not fit within cavity 50 but a fob could. Thus, when a fob is positioned between housing 18' and charger 14, it would be aligned with rim 52 to sit in cavity 50 and when a card is positioned between housing 18' and charger 14, the card would be aligned to fit within rim 42, but would not enter cavity 50. Thus, the use of two cavities 40, 50 with two rims 42, 52 enables the housing to align differently sized cards, fobs and/or other devices for proper placement and secure holding during use whether both or only one are placed in device 10. In some embodiments, housing could also include a second recessed portion on ramp 20 leading directly into cavity 52 (though this is not shown in Fig. 3). Such a second recessed ramp would function similarly to recessed ramp 46 described in relation to Fig. 2, only the second recessed ramp would lead to second recess 50 to help guide and align a fob or other device to be placed in recess 50.

Also shown is retention notch 54. Retention notch 54 can be an extension of front face 38 over a part of cavity 40 to ensure that any card in cavity 40 stays retained in cavity 40 even if housing 18' is pulled away from charger 14, for example, to place a phone between housing 18' and charger 14. This can also help to ensure that a card does not slip out of cavity 40 and fall somewhere unreachable, for example, under a seat when device 10 is used in a vehicle.

Housing 18, 18' could be formed of plastic, for example, moulded or printed plastic and formed integrally. Housing 18, 18' could be hollow to ensure that it is light-weight.

In use, device 10 allows for simple yet effective positioning and holding of one or more devices, cards and fobs for vertical charging, reading and/or storage. The positioning of charger 14 and/or reader unit 16 in a vertical manner from base 12 ensures that less overall room is needed for the charging and/or reading. Biased pivot arm 22 with housing 16 provides a secure and effective way of ensuring that the phone or other device to be charged, read and/or stored stays in position for effective charging, reading and/or storing and does not fall even when subject to a variety of forces, for example in an operating vehicle. The configuration of housing 18, 18' with one or more cavities helps to retain a card and/or fob when housing is biased against the charger 14, forming a pocket in the cavity that is surrounded on all sides except the top. This helps to reduce any chance of the card or fob falling out of device 10 accidentally, and can be further enhanced with one or more retention or fixing features (e.g., a notch). Ramp 20 (and particularly recessed ramp) can help to align the card or fob for placement into our removal from cavity 40, 50. Additionally, ramp 20 can help the user for manually moving housing 18 away from the charger 14 when needed to place or remove devices/cards/fobs for charging, reading and/or storage. Housing 18 also provides force to hold a phone (or other device needing to be charged) against major surface 15 of charger 14, holding it vertically in place for effective charging. Thus, device 10 provides for effective vertical charging, reading and/or storage of a phone (or other device which could be inductively charged), card (e.g., keycard) and/or fob. The configuration of housing 18 provides for effective retention of one or more devices at the same time, even when in an operating vehicle. Such a device 10 is particularly advantageous when used in vehicles as the vertical charging, card reading and/or storage frees up more space in consoles and/or the dash for other devices or systems.

While Figs. 1A-1B show the pivot arm biasing the housing away from the console 29, device 10 could be alternately configured such that the pivot arm biases the housing toward the console or dash and the charger/reader unit is located at, near or with another vehicle structure such as the dash with the pivot arm pushing the housing against the charger/reader unit.

## Claims

1. A device (10) comprising:
a housing (18, 18') comprising a front face (38) with a cavity (40) configured to receive a card and/or fob;
a base (12) comprising a charger (14) with a major surface (15) extending substantially vertically from the base (12); and
a biased pivot arm (22) connected to the housing on a first end (24);
**characterized in that** the pivot arm (22) is biased such that the front face (38) of the housing (18) is pushed toward the major surface (15) of the charger (14) but can be pivoted back to receive one or more devices between the front face (38) and the major surface (15).

2. The device (10) of claim 1, wherein the pivot arm (22) is biased with a spring (30).

3. The device (10) of any of the preceding claims, wherein the pivot arm (22) and the base (12) are connected to a lower pivot housing (28).

4. The device (10) of any of the preceding claims, wherein the pivot arm (22) is connected to the housing with a pivot or rotatable connection.

5. The device (10) of any of the preceding claims, wherein the charger (14) is an inductive charger and/or is configured such that a device is charged when held against the major surface (15) of the charger (14) by the housing (18, 18').

6. The device (10) of any of the preceding claims,
wherein the cavity (40) is a first cavity and is configured to receive one of a card and a fob;
wherein the front face (38) of the housing (18') comprises a second cavity (50); and
wherein the second cavity (50) is configured to receive an other of the card and the fob.

7. The device (10) of claim 6, wherein the second cavity (50) extends further into the front face (38) of the housing (18') than the first cavity (40).

8. The device (10) of any of the preceding claims, and further comprising a ramp (20) leading to the cavity (40) of the housing (18).

9. The device (10) of claim 8, wherein the ramp (20) comprises a rim (48) defining a recessed surface (46) leading into the cavity (40).

10. The device (10) of any of the preceding claims, and further comprising a reader unit (16) for a card.

11. The device (10) of claim 10, wherein the reader unit (16) is configured to read a card when the front face (38) of the housing (18, 18') is pushed toward the major surface (15) of the charger (14).

12. The device (10) of any of the preceding claims, wherein at least part of the front face (38) and/or major surface (15) comprises rubber and/or floc.

13. The device (10) of any of the preceding claims, and further comprising a fixing feature (54) to retain the card and/or fob in the cavity (40, 50).

14. A vehicle comprising the device of any of the preceding claims, preferably , wherein the device is connected to a console or dash(29).

15. A method of forming a vertical charging, reading and/or storage device (10), the method comprising:
connecting a housing (18, 18') to a first side of a pivot arm (22), the housing (18, 18') comprising a front face (38) with a cavity (40) configured to receive a card and/or fob;
connecting a charger (14) to a base (12), the charger (14) comprising a major surface (15) extending substantially vertically from the base (12); and
biasing the pivot arm (22) such that the front face (38) of the housing (18, 18') is biased toward the major surface (15) of the charger (14).

## Patentansprüche

1. Vorrichtung (10), umfassend:
ein Gehäuse (18, 18'), das eine Vorderseite (38) mit einem Hohlraum (40) umfasst, der zur Aufnahme einer Karte und/oder eines Schlüsselanhängers ausgestaltet ist,
eine Basis (12), die ein Ladegerät (14) mit einer Hauptfläche (15) umfasst, die sich im Wesentlichen vertikal von der Basis (12) erstreckt, und
einen vorgespannten Schwenkarm (22), der an einem ersten Ende (24) mit dem Gehäuse verbunden ist,
**dadurch gekennzeichnet, dass**
der Schwenkarm (22) derart vorgespannt ist, dass die Vorderseite (38) des Gehäuses (18) zu der Hauptfläche (15) des Ladegeräts (14) hin geschoben wird, jedoch zurückgeschwenkt werden kann, um eine oder mehrere Vorrichtungen zwischen der Vorderseite (38) und der Hauptfläche (15) aufzunehmen.

2. Vorrichtung (10) nach Anspruch 1, wobei der Schwenkarm (22) mit einer Feder (30) vorgespannt ist.

3. Vorrichtung (10) nach einem der vorhergehenden Ansprüche, wobei der Schwenkarm (22) und die Basis (12) mit einem unteren Schwenkgehäuse (28) verbunden sind.

4. Vorrichtung (10) nach einem der vorhergehenden Ansprüche, wobei der Schwenkarm (22) mittels einer Schwenk- oder Drehverbindung mit dem Gehäuse verbunden ist.

5. Vorrichtung (10) nach einem der vorhergehenden Ansprüche, wobei das Ladegerät (14) ein induktives Ladegerät ist und/oder so ausgestaltet ist, dass eine Vorrichtung geladen wird, wenn sie durch das Gehäuse (18, 18') gegen die Hauptfläche (15) des Ladegeräts (14) gehalten wird.

6. Vorrichtung (10) nach einem der vorhergehenden Ansprüche,
wobei der Hohlraum (40) ein erster Hohlraum ist und zur Aufnahme einer Karte oder eines Schlüsselanhängers ausgestaltet ist,
wobei die Vorderseite (38) des Gehäuses (18') einen zweiten Hohlraum (50) umfasst und
wobei der zweite Hohlraum (50) zur Aufnahme des jeweils anderen der Karte und des Schlüsselanhängers ausgestaltet ist.

7. Vorrichtung (10) nach Anspruch 6, wobei sich der zweite Hohlraum (50) weiter als der erste Hohlraum (40) in die Vorderseite (38) des Gehäuses (18') erstreckt.

8. Vorrichtung (10) nach einem der vorhergehenden Ansprüche und ferner umfassend eine Rampe (20), die zu dem Hohlraum (40) des Gehäuses (18) führt.

9. Vorrichtung (10) nach Anspruch 8, wobei die Rampe (20) einen Rand (48) umfasst, der eine ausgesparte Fläche (46) definiert, die in den Hohlraum (40) führt.

10. Vorrichtung (10) nach einem der vorhergehenden Ansprüche und ferner umfassend eine Leseeinheit (16) für eine Karte.

11. Vorrichtung (10) nach Anspruch 10, wobei die Leseeinheit (16) dazu ausgestaltet ist, eine Karte zu lesen, wenn die Vorderseite (38) des Gehäuses (18, 18') zu der Hauptfläche (15) des Ladegeräts (14) hin geschoben wird.

12. Vorrichtung (10) nach einem der vorhergehenden Ansprüche, wobei mindestens ein Teil der Vorderseite (38) und/oder der Hauptfläche (15) Gummi und/oder Flock umfasst.

13. Vorrichtung (10) nach einem der vorhergehenden Ansprüche und ferner umfassend ein Fixiermerkmal (54) zum Halten der Karte und/oder des Schlüsselanhängers in dem Hohlraum (40, 50).

14. Fahrzeug, umfassend die Vorrichtung nach einem der vorhergehenden Ansprüche, vorzugsweise wobei die Vorrichtung mit einer Konsole oder einem Armaturenbrett (29) verbunden ist.

15. Verfahren zum Ausbilden einer vertikalen Lade-, Lese- und/oder Speichervorrichtung (10), wobei das Verfahren Folgendes umfasst:
Verbinden eines Gehäuses (18, 18') mit einer ersten Seite eines Schwenkarms (22), wobei das Gehäuse (18, 18') eine Vorderseite (38) mit einem Hohlraum (40) umfasst, der zur Aufnahme einer Karte und/oder eines Schlüsselanhängers ausgestaltet ist,
Verbinden eines Ladegeräts (14) mit einer Basis (12), wobei das Ladegerät (14) eine Hauptfläche (15) umfasst, die sich im Wesentlichen vertikal von der Basis (12) erstreckt, und
Vorspannen des Schwenkarms (22), so dass die Vorderseite (38) des Gehäuses (18, 18') zu der Hauptfläche (15) des Ladegeräts (14) hin vorgespannt ist.

## Revendications

1. Dispositif (10) comprenant :
un boîtier (18, 18') comprenant une face avant (38) dotée d'une cavité (40) conçue pour recevoir une carte et/ou une clé électronique ;
une base (12) comprenant un chargeur (14) doté d'une surface principale (15) s'étendant sensiblement verticalement à partir de la base (12) ; et
un bras pivotant (22) sollicité relié au boîtier sur une première extrémité (24) ;
**caractérisé en ce que**
le bras pivotant (22) est sollicité de sorte que la face avant (38) du boîtier (18) soit poussée vers la surface principale (15) du chargeur (14), mais puisse pivoter vers l'arrière pour recevoir un ou plusieurs dispositifs entre la face avant (38) et la surface principale (15).

2. Dispositif (10) selon la revendication 1, le bras pivotant (22) étant sollicité par un ressort (30).

3. Dispositif (10) selon l'une quelconque des revendications précédentes, le bras pivotant (22) et la base (12) étant reliés à un boîtier pivotant inférieur (28).

4. Dispositif (10) selon l'une quelconque des revendications précédentes, le bras pivotant (22) étant relié au boîtier par une liaison pivotante ou rotative.

5. Dispositif (10) selon l'une quelconque des revendications précédentes, le chargeur (14) étant un chargeur inductif et/ou étant conçu de sorte qu'un dispositif soit chargé lorsqu'il est maintenu contre la surface principale (15) du chargeur (14) par le boîtier (18, 18').

6. Dispositif (10) selon l'une quelconque des revendications précédentes,
la cavité (40) étant une première cavité et étant conçue pour recevoir l'un parmi une carte et une clé électronique ;
la face avant (38) du boîtier (18') comprenant une seconde cavité (50) ; et
la seconde cavité (50) étant conçue pour recevoir un autre élément parmi la carte et la clé électronique.

7. Dispositif (10) selon la revendication 6, la seconde cavité (50) s'étendant plus loin dans la face avant (38) du boîtier (18') que la première cavité (40).

8. Dispositif (10) selon l'une quelconque des revendications précédentes, et comprenant en outre une rampe (20) menant à la cavité (40) du boîtier (18).

9. Dispositif (10) selon la revendication 8, la rampe (20) comprenant un rebord (48) définissant une surface évidée (46) débouchant dans la cavité (40).

10. Dispositif (10) selon l'une quelconque des revendications précédentes, et comprenant en outre une unité de lecture (16) pour une carte.

11. Dispositif (10) selon la revendication 10, l'unité de lecture (16) étant conçue pour lire une carte lorsque la face avant (38) du boîtier (18, 18') est poussée vers la surface principale (15) du chargeur (14).

12. Dispositif (10) selon l'une quelconque des revendications précédentes, au moins une partie de la face avant (38) et/ou de la surface principale (15) comprenant du caoutchouc et/ou du floc.

13. Dispositif (10) selon l'une quelconque des revendications précédentes, et comprenant en outre un élément de fixation (54) pour retenir la carte et/ou la clé électronique dans la cavité (40, 50).

14. Véhicule comprenant le dispositif selon l'une quelconque des revendications précédentes, de préférence, le dispositif étant connecté à une console ou un tableau de bord (29).

15. Procédé de formation d'un dispositif (10) de charge, de lecture et/ou de stockage vertical, le procédé comprenant les étapes consistant à :
relier un boîtier (18, 18') à un premier côté d'un bras pivotant (22), le boîtier (18, 18') comprenant une face avant (38) dotée d'une cavité (40) conçue pour recevoir une carte et/ou une clé électronique ;
connecter un chargeur (14) à une base (12), le chargeur (14) comprenant une surface principale (15) s'étendant sensiblement verticalement à partir de la base (12) ; et
solliciter le bras pivotant (22) de sorte que la face avant (38) du boîtier (18, 18') soit sollicitée vers la surface principale (15) du chargeur (14).
